# EUROPEAN PATENT APPLICATION

(11) **EP 4 819 501 A1**
(43) Date of publication of application: **07.10.2026**
(21) Application number: 23959726.3
(22) Date of filing: 28.11.2023
(51) Int. Cl.: H04B 5/00, H04W 76/11

(54) **WIRELESS COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Taor, Simon Edward William
(86) International application number: PCT/CN2023/134755
(87) International publication number: WO 2025/111803

(57) **Abstract**

Provided are a wireless communication method and apparatus. The method comprises: a first device receives a first message sent by a second device, wherein the first message is used for triggering the first device having the value of a flag bit as a first value to execute a target process, and the target process is used for the first device to report the service data to the second device; and when the first device determines that the target process has been completed, the first device sets the value of the flag bit from the first value to a second value. The second device triggers, by means of the first message, the first device having the value of the flag bit as the first value to execute the target process, and after completing execution of the target process, the triggered first device sets the value of the flag bit from the first value to the second value, thereby helping to prevent the first device from responding to the trigger of the first message again.

## Description

### TECHNICAL FIELD

The disclosure relates to the technical field of communications, and more particularly to a wireless communication method and apparatus.

### RELATED ART

In a wireless communication system, a network device may typically trigger a terminal device to perform a target process. However, this operation may be performed in parallel, that is, the network device may trigger multiple terminal devices simultaneously. At this time, how to prevent the terminal device that has completed the target process from responding to the trigger of the network device again is a problem to be solved.

### SUMMARY

The disclosure provides a wireless communication method and apparatus. Various aspects of the disclosure are described below.

According to a first aspect, there is provided a wireless communication method, including the following operations. A first device receives a first message from a second device. The first message is configured to trigger the first device, whose value of a flag bit is set to a first value, to execute a target process, and the target process is configured for the first device to report service data to the second device. If the first device determines that the target process has been completed, the first device sets the value of the flag bit from the first value to a second value.

According to a second aspect, there is provided a wireless communication method, including the following operations. A first device receives a first message from a second device. The first message is configured to trigger the first device to report data. If reporting of first data by the first device is completed, the first device deletes the first data from a memory and/or changes a value of a first identifier from a first value to a second value.

According to a third aspect, there is provided a first device. The first device includes: a reception module configured to receive a first message from a second device, the first message being configured to trigger the first device, whose value of a flag bit is set to a first value, to execute a target process, and the target process being configured for the first device to report service data to the second device; a determination module configured to determine whether the target process has been completed; and a setting module configured to set the value of the flag bit from the first value to a second value when the determination module determines that the target process has been completed.

According to a fourth aspect, there is provided a first device. The first device includes: a first module configured to receive a first message from a second device, the first message being configured to trigger the first device to report data; and a second module configured to delete first data from a memory and/or change a value of a first identifier from a first value to a second value, after reporting of the first data by the first device is completed.

According to a fifth aspect, there is provided a first device. The first device includes a memory for storing a program and a processor configured to call the program in the memory to cause the first device to perform the method described in the first or the second aspect.

According to a sixth aspect, there is provided an apparatus including a processor configured to call a program from a memory to cause the apparatus to perform the method described in the first or the second aspect.

According to a seventh aspect, there is provided a chip including a processor configured to call a program from a memory to cause a device on which the chip is mounted to perform the method described in the first or the second aspect.

According to an eighth aspect, there is provided a computer-readable storage medium having stored thereon a program that causes a computer to perform the method described in the first or the second aspect.

According to a ninth aspect, there is provided a computer program product including a program that causes a computer to perform the method described in the first or the second aspect.

According to a tenth aspect, there is provided a computer program that causes a computer to perform the method described in the first or the second aspect.

In the disclosure, the second device triggers the first device, whose value of the flag bit is set to the first value, to execute the target process through the first message, and the triggered first device sets the value of the flag bit from the first value to the second value after completing the target process, thereby helping to prevent the first device from responding to the trigger of the first message again.

### BRIEF DESCRIPTION OF THE DRAWINGS

FIG. 1 is a schematic structural diagram of a wireless communication system to which embodiments of the disclosure are applicable.
FIG. 2 is a schematic structural diagram of an internet of things (IoT) communication system to which the embodiments of the disclosure are applicable.
FIG. 3 is a schematic diagram of a network structure of an IoT communication system.
FIG. 4 is a schematic structural diagram of a radio frequency (RF) receiver.
FIG. 5 is a schematic structural diagram of an intermediate frequency receiver.
FIG. 6 is a schematic flowchart of an inventory service in a radio frequency identification (RFID) system.
FIG. 7 is a schematic flowchart of a wireless communication method according to an embodiment of the disclosure.
FIG. 8 is a schematic flowchart of a wireless communication method according to another embodiment of the disclosure.
FIG. 9 is a schematic flowchart of a wireless communication method according to another embodiment of the disclosure.
FIG. 10 is a schematic flowchart of a wireless communication method according to another embodiment of the disclosure.
FIG. 11 is a schematic structural diagram of a first device according to an embodiment of the disclosure.
FIG. 12 is a schematic structural diagram of a first device according to another embodiment of the disclosure.
FIG. 13 is a schematic structural diagram of a communication apparatus according to an embodiment of the disclosure.

### DETAILED DESCRIPTION

Hereinafter, technical solutions in the disclosure will be described with reference to the accompanying drawings.

### Communication system architecture

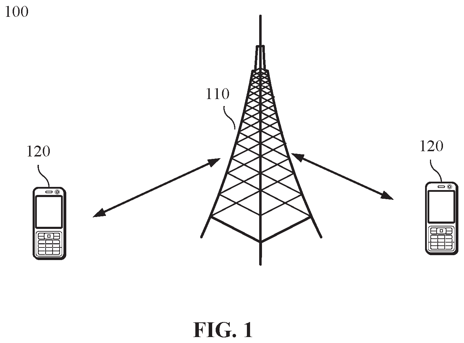

FIG. 1 is an example diagram of a system architecture of a wireless communication system 100 to which embodiments of the disclosure are applicable. The wireless communication system 100 may include a network device 110 and a terminal device 120. The network device 110 may be a device that communicates with the terminal device 120. The network device 110 may provide communication coverage for a particular geographic area and may communicate with the terminal device 120 located within the coverage area.

FIG. 1 exemplarily shows a network device and a terminal device, and optionally, the wireless communication system 100 may include one or more network devices 110 and/or one or more terminal devices 120. For a single network device 110, the one or more terminal devices 120 may all be located within the network coverage of the network device 110, or may all be located outside the network coverage of the network device 110, or part of the terminal devices 120 may be located within the coverage of the network device 110 and the other part may be located outside the network coverage of the network device 110, which is not limited in the embodiment of the disclosure.

Optionally, the wireless communication system 100 may further include other network entities such as a network controller and a mobility management entity, and the embodiments of the disclosure are not limited thereto.

It should be understood that the technical solutions in the embodiments of the disclosure may be applied to various communication systems, such as a fifth generation (5G) system or a new radio (NR) system, a long term evolution (LTE) system, an LTE frequency division duplex (FDD) system, an LTE time division duplex (TDD) system, and the like. The technical solutions provided in the disclosure may also be applied to future communication systems, such as a sixth generation mobile communication system, a satellite communication system, and the like.

The terminal device in the embodiments of the disclosure may also be referred to as a user equipment (UE), an access terminal, a subscriber unit, a subscriber station, a mobile unit, a mobile station (MS), a mobile terminal (MT), a remote station, a remote terminal, a mobile device, a user terminal, a terminal, a wireless communication device, a user agent, or a user device. The terminal device in the embodiments of the disclosure may be a device that provides voice and/or data connectivity to a user, and may be used to connect people, objects, and machines, for example, a handheld device having a wireless connection function, a vehicle-mounted device, or the like. The terminal device in the embodiments of the disclosure may be a mobile phone, a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may act as a base station. For example, the UE may act as a scheduling entity that provides sidelink signals between UEs in vehicle-to-everything (V2X), device-to-device (D2D), etc. For example, a cellular phone and an automobile communicate with each other using the sidelink signal. The cellular phone may communicate with a smart home device without relaying a communication signal through a base station.

The network device in the embodiments of the disclosure may be a device for communicating with a terminal device, and the network device may also be referred to as an access network device or a radio access network device, for example, the network device may be a base station. The network device in the embodiments of the disclosure may refer to a radio access network (RAN) node (or device) that connects the terminal device to the wireless network. The base station may broadly cover or be replaced with various names such as a NodeB, an evolved NodeB (eNB), a next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access point (AP), a transmission node, a transmitting and receiving node, a base band unit (BBU), a remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also refer to a communication module, a modem, or a chip disposed within the aforementioned devices or apparatuses. The base station may also be a mobile switching center, a device that assumes the function of a base station in a D2D communication, a V2X communication or a machine-to-machine (M2M) communication, a network-side device in a 6G network, a device that assumes the function of a base station in a future communication system, or the like. The base station may support networks employing the same or different access technologies. The embodiments of the disclosure do not limit the specific technology and the specific device form adopted by the network device.

The base station may be fixed or mobile. For example, a helicopter or drone may be configured to act as a mobile base station, and one or more cells may move based on a location of the mobile base station. In other examples, the helicopter or drone may be configured as a device to communicate with another base station.

In some deployments, the network device in the embodiment of the disclosure may refer to a CU or a DU, or the network device includes a CU and a DU. The gNB may also include an AAU.

The network device and the terminal device may be deployed on land, including indoor or outdoor, handheld or vehicle-mounted. The network device and the terminal device may also be deployed on the water, and may also be deployed on aircraft, balloons and satellites in the air. The scenario in which the network device and the terminal device are located is not limited in the embodiments of the disclosure.

It should be understood that all or part of the functionality of the communication device in the disclosure may also be implemented by software functionality running on hardware, or by virtualization functionality instantiated on a platform, such as a cloud platform.

### Internet of things (IoT) technology

The rise of the IoT technology poses new challenges to the communication system. Usage scenarios of an IoT terminal device may include logistics, warehousing, factory automation, animal husbandry and the like. Intermittent simple communication or rough positioning and tracking may be performed between the IoT terminal device and the network device. Even the simplest IoT terminal device, such as an NB-IoT terminal device used for gas and electricity metering, require batteries to provide energy. However, although energy consumption of the IoT terminal devices is very low, their internal batteries may last for up to a few years and will eventually be exhausted. Therefore, the battery of the IoT terminal device needs to be replaced regularly, which consumes a lot of labor. Moreover, some industrial scenarios have certain dangers and are not suitable for manual operation. Therefore, battery-free IoT terminal devices have emerged as a solution.

The number of the battery-free IoT terminal devices is huge and the cost is low. Generally, manual maintenance is no longer required after installation. An RFID terminal device may meet people's demand for the battery-free IoT terminal device to some extent. However, the operation of an RFID system still requires human participation, for example, in some RFID systems, a human hand-held reader is required. Moreover, a wireless coverage of a single RFID reader is limited (within 10 meters), so the RFID system arranged in a large area requires more human participation. For example, when the RFID system is used to count goods in a large supermarket, it takes a lot of manpower, material resources and time.

### IoT communication system

Transplanting systems like RFID into a cellular network can well solve the problem of limited coverage, because the cellular network, such as the 4th generation (4G) system and the 5G system, have achieved full coverage or at least coverage in major cities in some countries or regions (such as China, Europe and the United States). Leveraging a broader network coverage, the communication or positioning process between the IoT terminal device and the network device may not require human participation. Therefore, the IoT terminal device can work uninterrupted and work efficiently. In addition, the IoT terminal device can even work efficiently in environments that are not suitable for human labor (such as wilderness, mines, and factories). Therefore, when applying the IoT terminal device, in addition to the initial need to associate the IoT terminal device with a specific object, subsequent data reading and writing, and operation and maintenance may be performed through, for example applications (Apps) on the smartphone, which is very convenient and efficient. Such a communication system may be referred to as an IoT communication system or a zero power communication system.

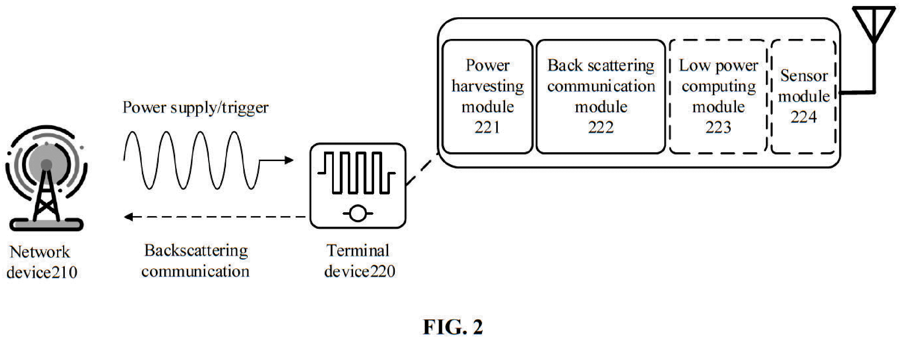

As illustrated in FIG. 2, the IoT communication system may include a network device 210 and a terminal device 220. The network device 210 may be referred to as a reader and the terminal device 220 may be referred to as a tag. The IoT communication system employs power harvesting and backscattering communication technology, and the network device 210 may transmit a wireless power sourcing signal and a downlink communication signal to the terminal device 220, and receive a backscattering signal from the terminal device 220. A basic terminal device 220 may include a power harvesting module 221, a backscattering communication module 222, and a low power computing module 223. In addition, the terminal device 220 may also include a memory module (not illustrated in the figure) for storing some basic information (such as article identification, etc.). Alternatively, the terminal device 220 may include a sensor module 224 for acquiring sensing data such as ambient temperature and ambient humidity.

The use cases of the IoT communication system may include four categories, namely inventory, sensor, tracking and command. The inventory refers to checking and supplementing the goods when they enter and leave a warehouse. Common sensors may include a temperature sensor, a pressure sensor, a humidity sensor and other sensors. The sensors may be used in occasions such as industry, agriculture and smart cities. Information collected by the sensors may be uploaded to a third-party APP through the IoT system for monitoring and management. The tracking generally refers to obtaining an approximate location of an object from time to time. For example, the user may know a location of his/her package in real time through the smart phone. The command refers to an operation on a certain servo mechanism through the IoT system, and the servo mechanisms may be connected to the IoT terminal devices. For example, people may water flowers and plants in their backyard through an App on their phone during office work or rest, and the watering servo mechanism may be connected to an IoT terminal device.

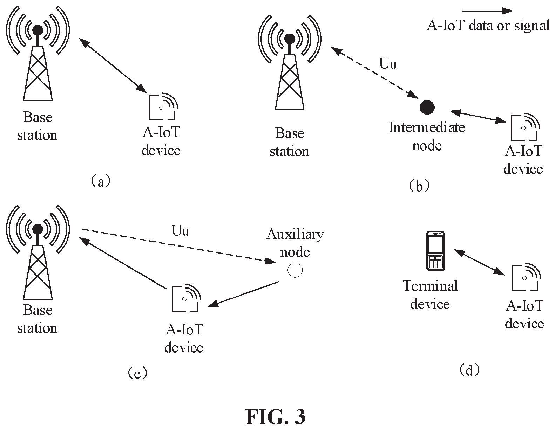

A network structure of the IoT communication system may be illustrated in FIG. 3, including four topological network structures. The IoT terminal devices derive their power from surrounding environment, such as radio frequency (RF), solar energy, thermal energy, mechanical vibration, wind energy, etc. The IoT terminal devices may be divided into three types, namely Type A, Type B, and Type C. The terminal devices of Type A and Type B may only communicate by reflecting and modulating received radio waves. This communication method is called back-scattering. In other words, the terminal devices of Type A and Type B cannot actively transmit radio signals, and their power is in the range of 1-10 microwatts (uW). The terminal device of Type A has the lowest transmission power and the lowest hardware complexity, which is basically close to a level of an RFID terminal device. The hardware of the terminal device of Type B is slightly more complicated, and may include a signal amplifier device and a certain energy storage device, so a communication distance between the terminal device of Type B and the network device is longer than that of Type A. The terminal device of Type C has the ability to actively transmit a radio wave, a transmission power of which is about 1-10 milliwatts (mW), and it can reserve a certain amount of energy. All three types of terminal devices can obtain energy from the environment and can continue to work for several years or more than 10 years. Furthermore, the terminal devices of Type A and Type B substantially remain in a dormant state until the network device triggers a communication procedure therebetween, so as to save energy. Only after being activated by a wireless signal from the network device, the terminal devices of Type A and Type B will start to operate.

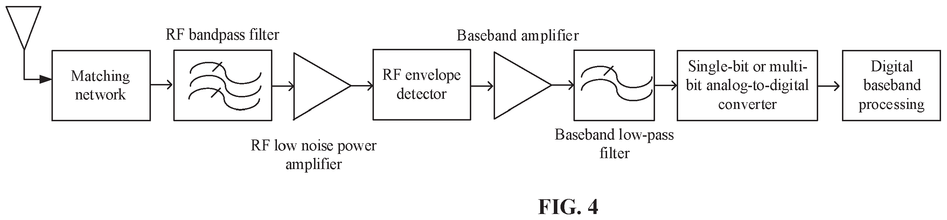

The IoT terminal device may incorporate two major types of receivers, namely Type 1 and Type 2, respectively. Type 1 receivers are wideband receivers, which are also referred to as RF receivers. The RF receiver may obtain a signal within a bandwidth range to be received based on the RF bandpass filter, and then perform envelope detection and subsequent baseband processing. The RF receiver features the simplest structure, and its power consumption may be as low as several uW or even lower. However, due to a poor accuracy of the RF bandpass filter, even when a target signal occupies a narrow bandwidth, the RF receiver tends to receive signals within a wider bandwidth. Therefore, more noise and interference will be introduced in the reception process of the RF receiver, resulting in a poor receiving performance, or in other words, a poor receiving sensitivity. A typical reception process of the RF receiver is illustrated in FIG. 4.

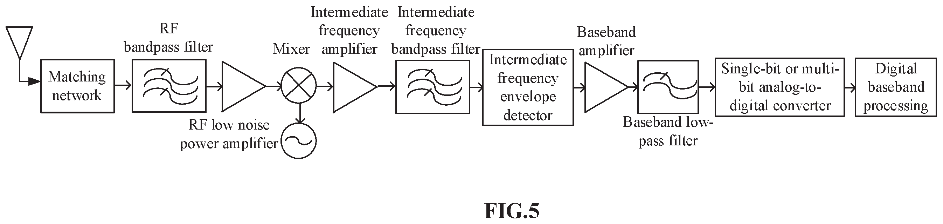

Type 2 receivers are narrowband receivers, such as intermediate frequency receivers or zero-intermediate frequency receivers. In signal reception, the narrowband receiver may not only use the RF bandpass filter to obtain the signal within the bandwidth range to be received, but also down-convert the RF signal, and further use a low pass filter to filter the baseband signal to eliminate noise and interference. Therefore, the narrowband receiver has a narrow receiving bandwidth, resulting in good receiving performance, or in other words, a high receiving sensitivity. However, the narrowband receiver requires the use of a local oscillator (LO). The power consumption of LO is high, and even a recommended LO needs to consume 100uW or even higher power consumption. Therefore, the narrowband receiver exhibits relatively high power consumption. Nevertheless, due to its low absolute power consumption, the narrowband receiver is still suitable for the zero-power device. A typical reception process of the intermediate frequency receiver is illustrated in FIG. 5.

The aforementioned terminal device of Type A typically employs a wideband receiver, the communication device of Type C typically employs a narrowband receiver, and the terminal device of Type B may employ either or both types of receivers.

In addition, in the IoT communication system, indoor and outdoor densities of tags are required to be 150/100 m² and 0.20/100 m², respectively. The indoor network coverage is 10-50 m, and the outdoor network coverage is 50-500 m. Based on this, the minimum and maximum number of indoor and outdoor tags within the coverage of a cell (calculated using a classic sector) may be illustrated in Table 1.

**Table 1**

| Scene | Minimum number | Maximum number |
|---|---|---|
| Indoor | 157 | 3926 |
| Outdoor | 523 | 52360 |

### Inventory service

The IoT communication system is most commonly used in the inventory service. In the inventory service, the reader requires all tags within the coverage that satisfy a condition to report information stored in their respective memories, such as an electronic product code (EPC) of the tag. Usually, the reader may transmit an inventory request to the tag, to enable the tag to trigger an initial access procedure and report the information. However, if all the tags that satisfy the condition respond to the inventory request from the reader in the same time, then this system will not work. This is because for a narrowband system such as IoT, radio resources in a time domain, frequency domain and the like are very small compared to the number of tags in the coverage, and therefore it is necessary to control only a portion of the tags to trigger the initial access procedure.

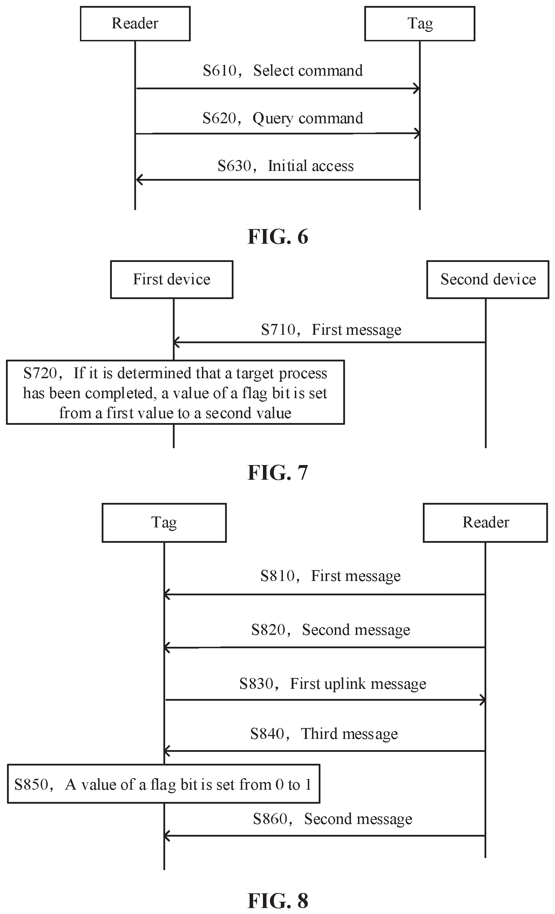

There are similar problems in the RFID system, and the inventory service in the RFID system is illustrated in FIG. 6. As illustrated in operation S610, the reader may first transmit a select command to the tag when triggering the inventory service. The reader may select part of the tags that satisfy the condition to make an inventory flag through the select command. A value of the inventory flag may be A or B. The reader may divide the tags into four groups, and the inventory flags of the tags in each group may be independently controlled. In operation S620, the reader transmits a query command to the tag, and the reader may mark which group of tags are being inventoried, and whether the value of the inventory flag of the inventoried tag is A or B. A parameter Q may also be carried in the same query command. After receiving the query command, the tag that meets the condition will generate a random number, which may range from [0, 2^{Q}-1]. Only the tag whose random number is equal to 0 will respond to the query command and initiate the initial access procedure as illustrated in operation S630. Other tags may assign a counter to this random number, and decrement this counter by 1 every time they receive a query command that requires the same set of tags to be inventoried. When the value of the counter for the random number is equal to 0, the corresponding tag will initiate the initial access procedure.

As an example, contents of the above query command may be as illustrated in Table 2.

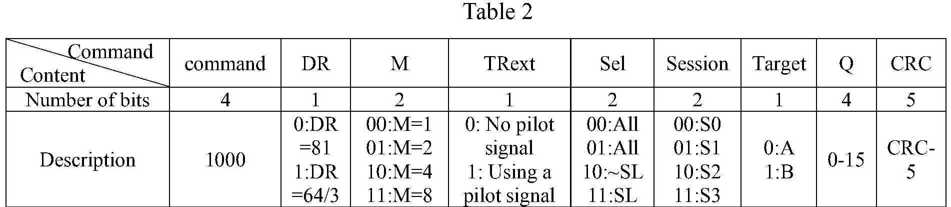

However, when a tag has completed a specific inventory operation (after the initial access procedure), the value of the inventory flag of this tag needs to be transitioned (i.e., transitioned from A to B or from B to A). Otherwise, this tag will respond again to the next query command targeting tags in the group to which it belongs, and participate in the inventory process. In the RFID system, the inventory flag of the tag is transitioned conditionally. Specifically, a tag may transition its inventory flag if it satisfies the following conditions. If the tag is in an acknowledged, open, or secured state, and has received a QueryAdjust or QueryRep command, a session parameter of the QueryAdjust or QueryRep command matches a session parameter of a prior query command, and the tag is not in the process of a kill or access command, then the tag may transition the inventory flag of its current session and transition to a ready state. The kill and access commands are used to deactivate a tag (rarely used), or to modify a tag from an open state to a secured state or maintain the secured state, respectively. The process of the kill and access commands may be a specific control process for the tag after completing the initial access. The tag may also complete many reading and writing processes to the memory, which will not be repeated here.

Based on the above description, in the inventory service in the RFID system, if the reader is inventorying a tag, the inventory flag of the tag will be transitioned after the inventory is completed unless the tag is in the process of the kill and access commands, thereby preventing the tag from responding to the next query again. In the IoT system, it is also necessary to prevent the tag that has been inventoried from responding to a trigger message from the system again. However, the way to solve this problem in the RFID system is not applicable to the IoT system. This is because in the IoT system, the inventory of the tags by the reader is performed in parallel, and may be processed in parallel in the frequency domain, the time domain, and the code domain. That is to say, a reader may inventory multiple tags at the same time in a single channel, but the above-mentioned method for transitioning the inventory flag in the RFID system cannot accurately control a single tag. Therefore, how to prevent the terminal device that has completed the inventory from responding to the trigger from the network device again in the IoT system is still a problem to be solved.

Based on this, a wireless communication method provided by an embodiment of the disclosure will be described in detail below with reference to FIG. 7. The method illustrated in FIG. 7 is applicable to any of the terminal devices and/or network devices described above, and in order to facilitate understanding, a first device and a second device are used to represent the devices to which the method is applicable.

The first device in the embodiment of the disclosure may be a terminal device. For example, the first device may be a tag. The second device may be a terminal device and/or a network device. For example, the second device may be a read-write device.

The solution in the embodiment of the disclosure may be applied to an IoT communication system. For example, the first device and the second device may be devices in the IoT communication system.

The solution in the embodiment of the disclosure may be applied to the service scenarios described above. For example, the solution in the embodiment of the disclosure may be applied to one or more of the following service scenarios: the inventory, the sensor, the tracking, and the command.

As illustrated in FIG. 7, the method includes operations S710-S720.

In operation S710, the first device receives a first message from the second device. The first message is configured to trigger the first device, whose value of a flag bit is set to a first value, to execute a target process, and the target process is configured for the first device to report service data to the second device.

The flag bit may be a flag bit inside the first device, and the flag bit may have at least two values, such as 0 and 1, then the first value may be 0 or 1. The first message may be a broadcast message, and the second device may transmit the first message to all of the first devices corresponding to the second device. When a first device receiving the first message has the value of the flag bit that is set to the first value, the first device may start executing the target process in response to the first message, and the target process may be an inventory process.

In operation S720, if the first device determines that the target process has been completed, the first device sets the value of the flag bit from the first value to a second value. For example, when the first device determines that the inventory process has been completed, the first device may set the value of its own flag bit to the second value. If the first message is received again, the first device will not respond to the trigger of the first message again.

Based on the method illustrated in FIG. 7, the second device triggers the first device whose value of the flag bit is set to the first value to execute the target process through the first message, and the triggered first device sets the value of the flag bit from the first value to the second value after completing the target process, thereby helping to prevent the first device from responding to the trigger of the first message again.

The target process may be determined to be completed based on one or more of: the first device completing transmission of an uplink message in the target process; the first device completing reception of a downlink message in the target process; the first device receiving a second message, which may indicate that the target process has been completed; or other criteria within the first device. The second message may be transmitted by the second device, or the second message may also be transmitted by a core network device connected to the second device.

As an example, when the first device has successfully transmitted the last uplink message, it is indicated that the first device has completed the transmission of the uplink message in the target process. At this time, the first device may set the value of the flag bit from the first value to the second value to avoid responding to the next trigger of the first message.

As another example, when the first device has successfully received the last downlink message, it is indicated that the first device has completed the reception of the downlink message in the target process. At this time, the first device may set the value of the flag bit from the first value to the second value to avoid responding to the next trigger of the first message.

As another example, the first device is explicitly informed by the second device that the target process has been completed, and at this time, the first device may set the value of the flag bit from the first value to the second value to avoid responding to the next trigger of the first message.

As another example, the first device is explicitly informed by the core network connected to the second device that the target process has been completed, and at this time, the first device may set the value of the flag bit from the first value to the second value to avoid responding to the next trigger of the first message.

As another example, the first device may determine that the target process has been completed based on other internal criteria, and at this time, the first device may set the value of the flag bit from the first value to the second value to avoid responding to the next trigger of the first message.

As another example, the first device may determine that the target process has been completed based on a plurality of the above situations, and the description thereof will not be repeated here.

In some implementations, the method illustrated in FIG. 7 may further include operation S730. In operation S730, if the target process is not completed, the first device maintains the value of the flag bit as the first value. The target process not being completed may mean that the target process is still in progress or the execution of the target process fails. At this time, the first device may continue to maintain the value of the flag bit as the first value, thereby having an opportunity to continue to complete the target process or restart the target process.

The target process not being completed may include one or more of the following situations: the first device not receiving an acknowledgment for the uplink message in the target process; the first device not receiving a downlink message in the target process; the target process being interrupted; or the first device failing to access the second device successfully.

As an example, the first device transmits an uplink message to the second device, but does not receive an acknowledgement for the uplink message. At this time, the first device may still maintain the value of the flag bit as the first value, so as to continue waiting for the acknowledgement for the uplink message.

As another example, if the first device does not receive a desired downlink message within a certain period of time, the first device may still maintain the value of the flag bit as the first value so as to continue waiting for the downlink message.

As another example, if the first device abandons the current target process for some internal reason, it indicates that the target process is interrupted. At this time, the first device may still maintain the value of the flag bit as the first value, so as to respond to the next first message and restart the target process.

As another example, when the first device fails to successfully access the second device due to a collision or other reasons during the initial access procedure, the first device may still maintain the value of the flag bit as the first value, so as to respond to the next first message and restart the target process.

As another example, the target process not being completed may include a plurality of the above situations, and the description thereof will not be repeated here.

In some implementations, the method illustrated in FIG. 7 may further include operation S740 before the first device receives the first message from the second device. In operation S740, the first device receives a third message from the second device. The third message may be configured to initialize the value of the flag bit in the first device to the first value, so as to trigger the first device by the first message. The third message may be a broadcast message, and the second device may broadcast the third message to all of the first devices corresponding to the second device.

In some implementations, the first device includes a state machine that may be used to determine whether the first device is in an initial state. The state machine may have at least two states, such as a first state and a second state. The first state may be an initial state and may also be referred to as an idle state. The initial state may be a state in which the first device is idle, e.g., a state in which the first device has not started executing the process. The second state may be another state different from the initial state, and the disclosure is not limited thereto. The terminal device in the initial state has not yet initiated any process, and thus executing the target process in response to the first message will not interrupt any ongoing processes.

In some implementations, if the first device determines that the first device is in the initial state based on the state machine, and the value of the flag bit in the first device is set to the first value, the first device may execute the target process and leave the initial state in response to the trigger of the first message. If the first message is received again in the process of executing the target process, the first device will not respond to the first message again, thereby helping to avoid the target process being interrupted.

As an example, the method illustrated in FIG. 7 is described below with reference to FIG. 8. Exemplarily, the first device in FIG. 8 may be a tag, the second device may be a reader, and the target process may be an inventory process. The method illustrated in FIG. 8 may include operations S810-S860.

In operation S810, the tag receives a first message from the reader. The first message here corresponds to the third message described above, and the first message may be used to initialize a flag bit of the tag, for example to initialize the flag bit to 0. In operation S820, the tag receives a second message from the reader. The second message here corresponds to the first message described above, and the second message is used to trigger the terminal device, whose value of the flag bit is set to 0, to execute the inventory process. When the terminal device in the initial state and whose value of the flag bit is 0 receives the second message, the terminal device starts to execute the inventory process and leaves the initial state. For example, the tag starts to perform an initial access procedure in order to subsequently exchange information with the reader. As illustrated in operation S830, the tag transmits a first uplink message to the reader, and the first uplink message is used to report service data. In operation S840, the tag receives a third message from the reader indicating that the inventory process has been completed. At this time, the tag can determine that the inventory process has been completed, so the tag changes the value of the flag bit to 1 in operation S850. In operation S860, the tag receives the second message from the reader again. However, at this time, the value of the flag bit of the tag is 1, and the tag no longer executes the inventory process in response to the message, thus avoiding the repeated execution of the inventory process by the tag.

Based on the method illustrated in FIG. 8, once the tag determines that the target process has been completed, the tag may actively modify the value of the flag bit. In this way, the modification of the value of the flag bit enables a precise control for a single tag. Furthermore, in this method, the tags may be logically divided into two groups. Initially, the tags, that have corresponding values of the flag bit initialized by the reader, belongs to the same group, such as a group with the flag bit of 0. When the inventory service starts, the reader instructs the tag with the flag bit of 0 to perform the inventory process. When a tag with the flag bit of 0 completes the inventory process, the value of its flag bit will be modified to 1, and the tag will be classified into a group with the flag bit of 1. As the inventory service progresses, there will be more and more tags in the group with the flag bit of 1, and there will be fewer and fewer tags in the group with the flag bit of 0. When there are no remaining tags in the group with the flag bit of 0, no tags will respond to the inventory message from the reader. At this time, the reader may consider that the inventory service has ended.

Hereinafter, a wireless communication method provided by another embodiment of the disclosure will be described.

As described above, the IoT communication system may also be used for a sensor service. In the sensor service, the terminal device usually needs to complete certain measurement tasks and report measured data to the network device in some manner. For the terminal devices of Type A and Type B described above, the network device is unaware when the terminal device has data to be reported. Therefore, the network device needs to periodically check whether the terminal device has data to be reported. During this checking by the network device, how to prevent the terminal device that has already reported data from reporting again is also a problem to be solved.

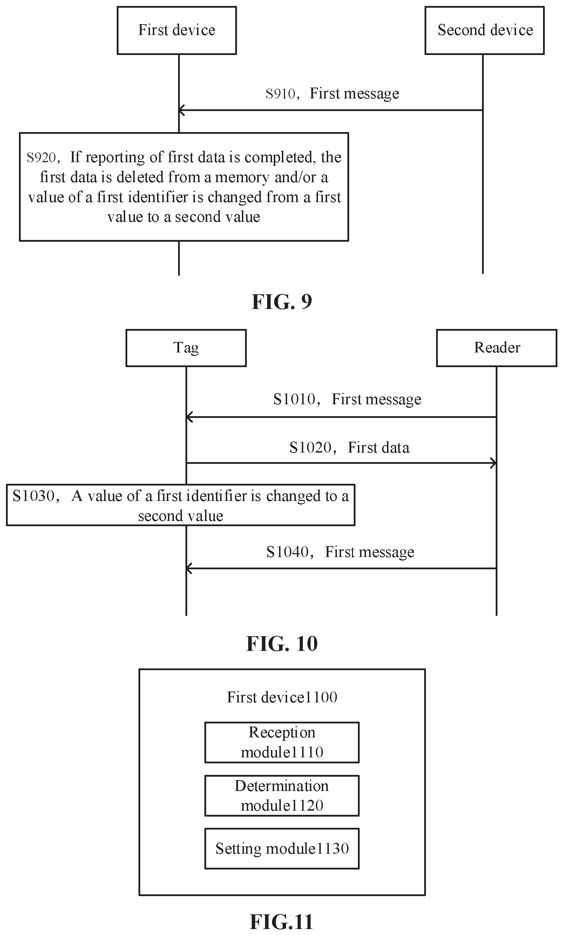

Based on this, a wireless communication method provided by another embodiment of the disclosure will be described in detail below with reference to FIG. 9. The method illustrated in FIG. 9 is applicable to any of the terminal devices and/or the network devices described above, and in order to facilitate understanding, a first device and a second device are used below to represent the devices to which the method is applicable.

The first device in the embodiment of the disclosure may be a terminal device. For example, the first device may be a tag. The second device may be a terminal device and/or a network device. For example, the second device may be a read-write device.

The solution in the embodiment of the disclosure may be applied to an IoT communication system. For example, the first device and the second device may be devices in the IoT communication system.

The solution in the embodiment of the disclosure may be applied to the service scenario described above. For example, the solution in the embodiment of the disclosure may be applied to one or more of the following service scenarios: the inventory, the sensor, the tracking, and the command.

As illustrated in FIG. 9, the method includes operations S910-S920.

In operation S910, the first device receives a first message from the second device. The first message is configured to trigger the first device to report data, for example, trigger the first device to report first data, and the first data may be data collected by a sensor.

In operation S920, if reporting of the first data by the first device is completed, the first device deletes the first data from a memory and/or changes a value of a first identifier from a first value to a second value.

The first identifier may be used to determine whether the first data is valid data. There may be at least two values of the first identifier, such as 0 and 1, and the first value may be 0 or 1, which is not limited in the disclosure. When the first identifier is set to the first value, it may indicate that the first data is the valid data, otherwise the first data is invalid data.

In some implementations, before the first device reports the first data, the first device may determine whether valid data exists in the memory. Further, the first device may determine that the valid data exists in the memory based on a presence of the first data in the memory; and/or the first device may determine that the valid data exists in the memory based on the first identifier having the first value. If the first device determines that the valid data exists in the memory, the first device reports the first data, otherwise the first device does not report the first data.

Based on the method illustrated in FIG. 9, after the reporting of the first data is completed, the first device deletes the first data from the memory and/or changes the value of the first identifier from the first value to the second value. When the first device receives the first message again, the first device may determine that there is no valid data in the memory. Therefore, the first device no longer reports the data, which helps to avoid the first device repeatedly reporting the first data.

In some implementations, before the first device reports the first data, the first device may determine whether a state of the first device is an initial state, and the initial state is a state in which the first device is idle. Further, the first device may include a state machine that may indicate a state of the first device. For example, the state machine may have at least two states. The first state may be an initial state, or may be referred to as an idle state, which indicates that the first device has not yet initiated any process. The second state may be another state different from the initial state, and the disclosure is not limited thereto. The terminal device in the initial state has not yet initiated any process, so reporting data in response to the first message will not interrupt other ongoing processes.

As an example, the method illustrated in FIG. 9 will be described below with reference to FIG. 10. Exemplarily, the first device in FIG. 10 may be a tag, the second device may be a reader, and the first data may be sensor data. The method illustrated in FIG. 10 may include operations S1010-S1040.

In operation S1010, the tag receives a first message from the reader, and the first message is used to trigger the tag to report the sensor data. The first message may be a broadcast message, that is, all tags corresponding to the reader may receive the first message. When the tag receiving the first message has valid data for reporting and is in the initial state, the tag will report data in response to the first message. For example, at this time, if the tag in FIG. 10 is in an initial state, and the first identifier of the tag is set to the first value, it is indicated that there is valid sensor data in the tag. Therefore, as illustrated in operation S1020, the tag reports the first data. In operation S1030, the tag modifies the value of the first identifier to the second value. In operation S1040, the tag receives the first message from the reader again. At this time, however, the first identifier is set to the second value, indicating that there is no valid sensor data in the tag. Therefore, the tag no longer reports data in response to the first message, thus avoiding the tag from repeatedly reporting the same sensor data.

Method embodiments of the disclosure are described in detail above, and device embodiments of the disclosure will be described in detail below. It should be understood that the description of the method embodiments corresponds to that of the device embodiments, and the portions not described in detail may be referred to the foregoing method embodiments.

FIG. 11 is a schematic structural diagram of a first device according to an embodiment of the disclosure. The first device 1100 in FIG. 11 includes a reception module 1110, a determination module 1120, and a setting module 1130. The reception module 1110 is configured to receive a first message from a second device. The first message is configured to trigger the first device, whose value of a flag bit is set to a first value, to execute a target process, and the target process is configured for the first device to report service data to the second device. The determination module 1120 is configured to determine whether the target process has been completed. The setting module 1130 is configured to set the value of the flag bit from the first value to a second value when the determination module 1120 determines that the target process has been completed.

In some implementations, the determination module 1120 may determine that the target process has been completed based on one or more of: the first device completing transmission of an uplink message in the target process; the first device completing reception of a downlink message in the target process; the first device receiving a second message indicating that the target process has been completed; or other criteria within the first device.

In some implementations, the second message is transmitted by the second device; or the second message is transmitted by a core network device connected to the second device.

In some implementations, the setting module 1130 is further configured to maintain the value of the flag bit to be the first value when the determination module 1120 determines that the target process is not completed.

In some implementations, the determination module 1120 determines that the target process is not completed based on one or more of: the first device not receiving an acknowledgement for the uplink message in the target process; the first device not receiving a downlink message in the target process; the target process being interrupted; or the first device not successfully accessing the second device.

In some implementations, the reception module 1110 is further configured to receive a third message from the second device before receiving the first message from the second device. The third message is configured to initialize the value of the flag bit in the first device to the first value.

In some implementations, the third message is a broadcast message.

In some implementations, the first device includes a state machine for determining whether the first device is in an initial state.

In some implementations, if the first device determines that the first device is in the initial state based on the state machine and the value of the flag bit in the first device is set to the first value, the first device executes the target process and leaves the initial state.

In some implementations, the first device is a terminal device, and the second device is a terminal device or a network device.

In some implementations, the first device is a tag.

In some implementations, the target process is an inventory process.

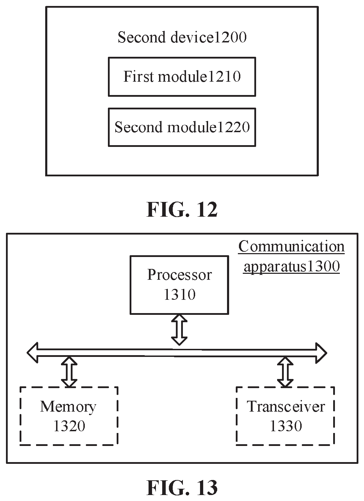

FIG. 12 is a schematic structural diagram of a first device according to another embodiment of the disclosure. The first device 1200 in FIG. 12 includes a first module 1210 and a second module 1220. The first module 1210 is configured to receive a first message from a second device. The first message is configured to trigger the first device to report data. The second module 1220 is configured to delete first data from a memory and/or change a value of a first identifier from a first value to a second value, after reporting of the first data by the first device is completed.

In some implementations, the first identifier is used for determining whether the first data is valid data.

In some implementations, the first device 1200 further includes a determination module 1230 configured to determine whether valid data exists in the memory before the first device reports the first data.

In some implementations, the determination module 1230 may determine that the valid data exists in the memory based on a presence of the first data in the memory and/or the first identifier having the first value.

In some implementations, the determination module 1230 is further configured to determine whether a state of the first device is an initial state before the first device reports the first data, where the initial state is a state in which the first device is idle.

In some implementations, the first device includes a state machine for indicating a state of the first device.

In some implementations, the first device is a terminal device, and the second device is a terminal device or a network device.

In some implementations, the first device is a tag.

In some implementations, the first data is data collected by a sensor.

FIG. 13 is a schematic structural diagram of a communication apparatus according to an embodiment of the disclosure. The communication apparatus 1300 in FIG. 13 may be used to implement the methods in the method embodiments described above. The apparatus 1300 may be a chip, a terminal device, or a base station.

The communication apparatus 1300 may include one or more processors 1310. The processor 1310 may support the apparatus 1300 to implement the methods described in the previous method embodiments. The processor 1310 may be a general-purpose processor or a special-purpose processor. For example, the processor may be a central processing unit (CPU). Alternatively, the processor may also be another general purpose processor, a digital signal processor (DSP), an application specific integrated circuit (ASIC), a field programmable gate array (FPGA) or other programmable logic devices, a discrete gate or transistor logic device, a discrete hardware component, or the like. The general purpose processor may be a microprocessor or the processor may be any conventional processor or the like.

The communication apparatus 1300 may further include one or more memories 1320. The memory 1320 has stored a program that is executable by the processor 1310 to cause the processor 1310 to perform the methods described in the above method embodiments. The memory 1320 may be independent of the processor 1310 or may be integrated into the processor 1310.

The communication apparatus 1300 may further include a transceiver 1330. The processor 1310 may communicate with other devices or chips through the transceiver 1330. For example, the processor 1310 may transmit/receive data to/from other devices or chips through the transceiver 1330.

It should be understood that in the embodiment of the disclosure, the processor 1310 may employ a general-purpose CPU, a microprocessor, an ASIC, or one or more integrated circuits for executing related programs to implement the technical solutions provided in the embodiments of the disclosure.

The memory 1320 may include a read-only memory and a random access memory, and provides instructions and data to the processor 1310. A portion of the processor 1310 may also include a non-volatile random access memory. For example, the processor 1310 may also store information of the device type.

During implementation, the operations in the above methods may be accomplished by an integrated logic circuitry in the form of hardware in the processor 1310 or instructions in the form of software. The method for requesting uplink transmission resources disclosed in connection with the embodiments of the disclosure may be directly embodied as execution by a hardware processor, or execution by a combination of the hardware in the processor and software modules. The software module may reside in a mature storage medium in the art, such as a random access memory, a flash memory, a read-only memory, a programmable read-only memory, an electrically erasable programmable memory, a register, etc. The storage medium is located in the memory 1320, and the processor 1310 reads the information in the memory 1320, and completes the operations of the above methods in combination with the hardware thereof. To avoid repetition, detailed description will not be repeated here.

It should be understood that in the embodiments of the disclosure, the processor 1310 may be a CPU, or may be another general purpose processor, a DSP, an ASIC, an FPGA or other programmable logic devices, a discrete gate or transistor logic device, a discrete hardware component, and the like. The general purpose processor may be a microprocessor or the processor may be any conventional processor or the like.

An embodiment of the disclosure further provides a computer-readable storage medium for storing a program. The computer-readable storage medium may be applied to the first device provided by the embodiment of the disclosure, and the program causes a computer to execute the wireless communication method in each embodiment of the disclosure.

An embodiment of the disclosure further provides a computer program product. The computer program product includes a program. The computer program product may be applied to a terminal device or a network device provided by the embodiment of the disclosure, and the program causes a computer to execute the wireless communication method executed by the first device in each embodiment of the disclosure.

An embodiment of the disclosure further provides a computer program. The computer program may be applied to a terminal device or a network device provided by the embodiment of the disclosure, and the computer program causes a computer to execute the wireless communication method executed by the first device in each embodiment of the disclosure.

It is to be understood that the terms "system" and "network" may be used interchangeably in the disclosure. In addition, the terminology used in the disclosure is for explanation of specific embodiments of the disclosure only, and is not intended to limit the disclosure. The terms "first," "second," "third," and "fourth," etc. in the specification, claims and the accompanying drawings of the disclosure are used to distinguish different objects, and are not used to describe a specific order. Furthermore, the terms "comprising" and "having" and any variations thereof are intended to cover a non-exclusive inclusion.

The "indication" mentioned in the embodiments of the disclosure may refer to a direct indication or an indirect indication, or represent an association relationship. For example, A indicates B, which may represent that A directly indicates B, for example, B may be obtained through A; it may also represent that A indicates B indirectly, for example, A indicates C, and B may be obtained through C; it may also indicate that there is an association relationship between A and B.

In the embodiments of the disclosure, "B corresponding to A" means that B is associated with A, and B may be determined from A. However, it should also be understood that determining B from A does not mean that B is determined from A alone, and that B may also be determined from A and/or other information.

In the embodiments of the disclosure, the term "correspondence" may indicate that there is a direct correspondence or an indirect correspondence between two objects, may indicate that there is an association relationship between the two objects, or may indicate a relationship between indicating and being indicated, configuring and being configured, or the like.

The term "and/or" in the embodiments of the disclosure merely describes an association relationship between associated objects, and indicates that there may be three kinds of relationships, for example, A and/or B, which may indicate: an independent existence of A, the existence of both A and B, or an independent existence of B. In addition, the character "/" in the disclosure generally indicates that the related objects before and after are in an "or" relationship.

In the embodiments of the disclosure, the term "comprising/including" may refer to directly including or indirectly including. Optionally, the "comprising" mentioned in the embodiments of the disclosure may be replaced with "indicating" or "for determining". For example, "A includes B", which may be replaced with "A indicates B", or "A is used to determine B".

In various embodiments of the disclosure, an order of the serial numbers of the above-mentioned processes does not imply an execution order, the execution order of various processes is determined based on their functions and inherent logics, and should not constitute any limitation on the implementation process of the embodiments of the disclosure.

In several embodiments provided herein, it should be understood that the disclosed systems, apparatuses, and methods may be implemented in other ways. For example, the device embodiments described above are merely schematic, for example, the division of units is only a logical function division, and there may be other division methods in actual implementation, for example, multiple units or components may be combined or integrated into another system, or some features may be ignored or not implemented. In addition, the shown or discussed coupling or direct coupling or communication connection between each other may be an indirect coupling or communication connection through some interfaces, devices or units, which may be electrical, mechanical or in other forms.

The units described as separate parts may or may not be physically separated, and the components displayed as units may or may not be physical units, that is, they may reside in a single place or may be distributed over a plurality of network units. Some or all of the units may be selected based on actual needs to achieve the purpose of the solution in the embodiments.

In addition, the functional units in various embodiments of the disclosure may be integrated into a processing unit, or each unit may exist as a separate physical unit, or two or more units may be integrated into one unit.

The embodiments described above may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with the embodiments of the disclosure are generated in whole or in part. The computer may be a general purpose computer, a special purpose computer, a computer network, or other programmable devices. The computer instructions may be stored in a computer-readable storage medium or transmitted from one computer-readable storage medium to another computer-readable storage medium, for example, the computer instructions may be transmitted from one website site, computer, server or data center to another website site, computer, server or data center by a wired (e.g. a coaxial cable, an optical fiber, a digital subscriber line (DSL)) or a wireless (e.g. infrared, wireless, microwave, etc.) manner. The computer-readable storage medium may be any available medium that is accessible to a computer or a data storage device such as a server, a data center, or the like that incorporates one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The foregoing description pertains solely to specific implementations of the disclosure, and the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

## Claims

1. A wireless communication method, comprising:
receiving, by a first device, a first message from a second device, wherein the first message is configured to trigger the first device, whose value of a flag bit is set to a first value, to execute a target process, and the target process is configured for the first device to report service data to the second device; and
when the first device determines that the target process has been completed, setting, by the first device, the value of the flag bit from the first value to a second value.

2. The method of claim 1, wherein the target process is determined to be completed based on one or more of:
the first device completing transmission of an uplink message in the target process;
the first device completing reception of a downlink message in the target process; or
the first device receiving a second message for indicating that the target process has been completed.

3. The method of claim 2, wherein
the second message is transmitted by the second device; or
the second message is transmitted by a core network device connected to the second device.

4. The method of any one of claims 1 to 3, further comprising:
when the target process is not completed, maintaining, by the first device, the value of the flag bit as the first value.

5. The method of claim 4, wherein the target process not being completed comprises one or more of:
the first device not receiving an acknowledgement for an uplink message in the target process;
the first device not receiving a downlink message in the target process;
the target process being interrupted; or
the first device failing to access the second device successfully.

6. The method of any one of claims 1 to 5, further comprising:
before receiving, by the first device, the first message from the second device,
receiving, by the first device, a third message from the second device, wherein the third message is used for initializing the value of the flag bit in the first device to the first value.

7. The method of claim 6, wherein the third message is a broadcast message.

8. The method of any one of claims 1 to 7, wherein the first device comprises a state machine configured to determine whether the first device is in an initial state.

9. The method of claim 8, further comprising:
when the first device determines that the first device is in the initial state based on the state machine and the value of the flag bit in the first device is set to the first value, executing, by the first device, the target process and leaving the initial state.

10. The method of any one of claims 1 to 9, wherein the first device is a terminal device and the second device is a terminal device or a network device.

11. The method of any one of claims 1 to 10, wherein the first device is a tag.

12. The method of any one of claims 1 to 11, wherein the target process is an inventory process.

13. A wireless communication method, comprising:
receiving, by a first device, a first message from a second device, wherein the first message is configured to trigger the first device to report data; and
when reporting of first data by the first device is completed, deleting, by the first device, the first data from a memory and/or changing a value of a first identifier from a first value to a second value.

14. The method of claim 13, wherein the first identifier is used for determining whether the first data is valid data.

15. The method of claim 13 or 14, further comprising:
before the first device reports the first data, determining, by the first device, whether valid data exists in the memory.

16. The method of claim 15, wherein determining, by the first device, whether the valid data exists in the memory comprises:
when the first data exists in the memory and/or the value of the first identifier is set to the first value, determining, by the first device, that the valid data exists in the memory.

17. The method of any one of claims 13 to 16, further comprising:
before the first device reports the first data, determining, by the first device, whether a state of the first device is an initial state, wherein the initial state is a state in which the first device is idle.

18. The method of claim 17, wherein the first device comprises a state machine configured to indicate the state of the first device.

19. The method of any one of claims 13 to 18, wherein the first device is a terminal device and the second device is a terminal device or a network device.

20. The method of any one of claims 13 to 19, wherein the first device is a tag.

21. The method of any one of claims 13 to 20, wherein the first data is data collected by a sensor.

22. A first device, comprising:
a reception module, configured to receive a first message from a second device, wherein the first message is configured to trigger the first device, whose value of a flag bit is set to a first value, to execute a target process, and the target process is configured for the first device to report service data to the second device;
a determination module, configured to determine whether the target process has been completed; and
a setting module, configured to set the value of the flag bit from the first value to a second value when the determination module determines that the target process has been completed.

23. A first device, comprising:
a first module, configured to receive a first message from a second device, wherein the first message is configured to trigger the first device to report data; and
a second module, configured to delete first data from a memory and/or change a value of a first identifier from a first value to a second value, after reporting of the first data by the first device is completed.

24. A first device, comprising a memory configured to store a program and a processor configured to call the program in the memory to cause the first device to perform the method of any one of claims 1 to 12 or the method of any one of claims 13 to 21.

25. An apparatus, comprising a processor configured to call a program from a memory to cause the apparatus to perform the method of any one of claims 1 to 12 or the method of any one of claims 13 to 21.

26. A chip, comprising a processor configured to call a program from a memory to enable a device on which the chip is mounted to perform the method of any one of claims 1 to 12 or the method of any one of claims 13 to 21.

27. A computer-readable storage medium having stored thereon a program that causes a computer to perform the method of any one of claims 1 to 12 or the method of any one of claims 13 to 21.

28. A computer program product comprising a program that causes a computer to perform the method of any one of claims 1 to 12 or the method of any one of claims 13 to 21.

29. A computer program, wherein the computer program causes a computer to perform the method of any one of claims 1 to 12 or the method of any one of claims 13 to 21.
